# EUROPÄISCHE PATENTSCHRIFT

(11) **EP 2 932 118 B1**
(45) Veröffentlichungstag und Bekanntmachung des Hinweises auf die Patenterteilung: **23.10.2019**
(21) Anmeldenummer: 13805265.9
(22) Anmeldetag: 07.11.2013
(51) Int. Cl.: F16C 33/38, F16C 33/66, F16C 33/78, F16C 19/06

(54) **ZWEITEILIGER KUGELLAGERKÄFIG MIT MEHREREN HALTEKLAUEN BILDENDEN ZUNGEN, DIE AUS ZWEI RINGFÖRMIGEN KÖRPERN NACH INNEN GERICHTET HERAUSRAGEN UND FREIRÄUME FÜR SCHMIERMITTEL BILDEN UND EIN KUGELLAGER MIT EINEM SOLCHEN LAGERKÄFIG**
TWO PART BALL BEARING CAGE WITH A PLURALITY OF PRONGS FORMING HOLDING CLAWS PROJECTING INWARD FROM TWO ANNULAR BODIES AND FORMING FREE SPACES FOR LUBRICANT AND A BALL BEARING WITH SUCH A CAGE
CAGE DE ROULEMENT À BILLES EN DEUX PARTIES AVEC PLUSIEURS LANGUETTES FORMANT SAILLIE VERS L'INTÉRIEUR SUR DEUX CORPS ANNULAIRE ET FORMANT DES PATTES DE MAINTIEN ET DES ÉVIDEMENTS POUR LUBRIFIANT ET UN ROULEMENT À BILLES COMPRENANT UNE TELLE CAGE

(30) Priorität: 11.12.2012 DE 102012222799
(43) Veröffentlichungstag der Anmeldung: 21.10.2015
(73) Patentinhaber: Schaeffler Technologies AG & Co. KG, 91074 Herzogenaurach (DE)
(72) Erfinder: SCHEIDEL, Markus, 91315 Höchstadt (DE); REHNER, Reinhard, 90451 Nürnberg (DE); FICKERT-GUENTHER, Thomas, 96114 Hirschaid (DE); BOHR, Andreas-Johann, 91074 Herzogenaurach (DE); ZWANZGER, Frank, 91474 Langenfeld (DE)
(86) Internationale Anmeldenummer: PCT/DE2013/200279
(87) Internationale Veröffentlichungsnummer: WO 2014/090238

(56) Entgegenhaltungen:
- WO-A1-2012/072110
- AT-B- 265 762
- DE-A1- 2 210 820
- DE-A1- 3 542 055
- GB-A- 2 049 070
- JP-A- 2001 289 249
- JP-A- 2005 083 554
- JP-A- 2007 040 383
- US-A- 929 427
- US-A- 4 019 790
- US-A1- 2012 060 634

## Beschreibung

### Gebiet der Erfindung

Die Erfindung betrifft einen zweiteiligen Lagerkäfig für ein Kugellager, umfassend einen ersten und einen zweiten ringförmigen Körper, die an ihren zu einander gerichteten Stirnflächen eine Vielzahl von Halteklauen aufweisen, wobei die beiden ringförmigen Körper identisch ausgebildet und derart miteinander montierbar sind, dass an die Halteklauen angrenzende Aussparungen des einen ringförmigen Körpers die Halteklauen des anderen ringförmigen Körpers aufnehmen, wodurch in Umfangsrichtung eine Anzahl voneinander beabstandeter Taschen zur Aufnahme und Führung von der gleichen Anzahl an Wälzkörpern entstehen. Ferner betrifft die Erfindung ein Kugellager, umfassend einen solchen zweiteiligen Lagerkäfig.

### Hintergrund der Erfindung

Die Druckschrift DE 35 10 467 A1 offenbart einen Kugellagerkäfig für Radialkugellager, bestehend aus einem Ringkörper aus nachgiebigem Material, welcher Taschen zur Aufnahme von Kugeln im Schnappsitz und Führungszapfen zum Leiten der Kugeln in die Taschen aufweist, wenn der Ringkörper von der Seite her in das Lager eingesetzt wird. Ein Haltering kann auf die Führungszapfen aufgesetzt werden, um zwischen den Führungszapfen gleiche Sehnenabstände aufrecht zu erhalten und eine Verformung des Ringkörpers zu beschränken. Dadurch kann der Ringkörper unter dem Einfluss von zwischen Kugeln und Käfig auftretenden Kontaktkräften bei Betrieb des Lagers nicht ausgestoßen werden.

Aus der Druckschrift DE 10 2010 007 789 A1 geht ein Kunststoffkäfig für ein Wälzlager mit Taschen zur Aufnahme von Wälzkörpern, der in axialer Richtung in zwei identische Käfigteile geteilt ist und über mehrere Schnappverbindungen zusammensteckbar ist, hervor. Die Schnappverbindung ist durch eine Rastklinke und eine Rastnut gebildet, wobei mindestens eine Rastklinke und eine Rastnut an jedem Käfigteil vorgesehen sind, die in jeweils eine Ringnut bzw. Rastklinke des anderen Käfigteils einrastbar sind. Die Schnappverbindung ist in radialer Richtung wirksam.

Ferner offenbart die Druckschrift GB 2 049 070 A zwei identische Käfige, die gegenüberliegend montiert sind und Halteklauen für die Wälzkörper aufweisen. Jedoch sind die Käfige winkelmäßig versetzt, damit die jeweiligen Klauen des Käfigs nicht in Kontakt gelangen. Jeder Käfig hält somit nur die Hälfte der Wälzkörper des Lagers.

Darüber hinaus offenbart die dem Erfindungsgegenstand am nächsten kommende Druckschrift DE 699 25 976 T2 einen Käfig für ein Kugellager, welcher einen ringförmigen Körper aufweist, der mit Aufnahmen in Form einer halbkugelförmigen Kalotte versehen ist. Die Aufnahmen sind auf einer Seite des ringförmigen Körpers offen und nehmen die Kugeln auf. Die andere Seite des ringförmigen Körpers weist eine Wand auf, die einen Ablenker bildet. Die Anzahl von Aufnahmen ist gleich der Anzahl von Lagerkugeln. Die Aufnahmen sind durch mindestens einer Halteklaue der Kugeln verlängert und weisen Vertiefungen auf, welche die Verwendung des Käfigs in Verbindung mit einem zweiten, identischen Käfig, der gegenüberliegend montiert ist, erlauben. Jedes Ende der halbkugelförmigen Kalotte, welche die Aufnahme bilden, weist mindestens eine Klaue auf. Die Klauen einer gleichen Aufnahme sind radial voneinander im Verhältnis zur Achse des Käfigs versetzt, wobei die Aufnahmen für jede Klaue eine Vertiefung aufweisen. Die Vertiefungen sind auf der gleichen radialen Höhe wie die Klaue am anderen Ende der Aufnahme angeordnet.

Nachteilig an den bereits zuvor zitierten Druckschriften ist, dass nach der Montage der beiden Käfighälften durch den kompakt gestalteten Lagerring nur ein eingeschränkter beziehungsweise nicht vorhandener Raum für Schmiermittel im Lager ist. Dies beeinträchtigt erheblich die Schmiereigenschaften und setzt die Lebensdauer des Lagers herab.

### Aufgabe der Erfindung

Ausgehend von den dargelegten Nachteilen des bekannten Standes der Technik liegt der Erfindung deshalb die Aufgabe zu Grunde, einen zweiteiligen Lagerkäfig mit optimierten Schmiereigenschaften und ein Kugellager, umfassend einen solchen Lagerkäfig bereitzustellen, um die Lebensdauer des Kugellagers zu erhöhen.

### Offenbarung der Erfindung

Die Aufgabe wird ausgehend von einem zweiteiligen Lagerkäfig gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß folgt über beide zueinander gerichteten Stirnflächen der ringförmigen Körper in Umfangsrichtung mehrfach nacheinander jeweils ein Paar von radial nebeneinander angeordneten Halteklauen mit einer zwischen diesen beiden Halteklauen angeordneten Aussparung, ein sich anschließender Taschengrund und eine am Ende des Taschengrundes angeordnete einzelne Halteklaue mit zwei radial daneben angeordneten Aussparungen, so dass nach der Montage des Lagerkäfigs jede Tasche durch mindestens zwei Paare von Halteklauen und mindestens zwei einzelne Halteklauen zusammen mit zwei Taschengründen gebildet wird, wobei sich zwischen zwei Taschen ein aus einem umfangsgerichteten Abstand zwischen einem Paar von Halteklauen einer Tasche und einer einzelnen Halteklaue einer benachbarten anderen Tasche resultierender Freiraum bildet, der zur Aufnahme von Schmiermittel geeignet ist und wobei die Taschen und die Freiräume über Durchbrüche fluidtechnisch miteinander verbunden sind. Dabei weisen die Paare von Halteklauen im Vergleich zu den einzelnen Halteklauen einen wälzkörperumschlingenden Hinterschnitt auf, so dass die beiden ringförmigen Körper bei einer Montage zu einem Lagerkäfig durch einen Formschluss zusammengehalten werden. Der wälzkörperumschlingende Hinterschnitt an den Paaren von Halteklauen realisiert ein Einschnappen der Paare von Halteklauen an die Wälzkörper, so dass der Lagerkäfig auf einer einfachen Art und Weise an einem Rollenlager montierbar ist. Demgegenüber sind die einzelnen Halteklauen axial gerade oder schräg nach dem größten Querschnitt der Wälzkörper ausgebildet, und weisen somit keinen wälzkörperumschlingenden Hinterschnitt auf.

Bei einer Montage der beiden ringförmigen Körper zum Lagerkäfig nehmen die Aussparungen die Halteklauen auf. Dabei weisen die Paare von Halteklauen eine komplementäre Form zu den zwei radial neben der einzelnen Halteklaue angeordneten Aussparungen auf. Die axiale Abstützung der beiden ringförmigen Körper erfolgt über die Paare von Halteklauen. Die einzelnen Halteklauen werden von den Aussparungen zwischen den beiden Halteklauen der Paare von Halteklauen aufgenommen. Die einzelnen Halteklauen füllen aufgrund einer geringeren Höhe als die Paare von Halteklauen die Aussparungen nicht komplett aus. Somit entsteht ein Durchbruch zwischen den einzelnen Halteklauen und der Stirnfläche des gegenüberliegenden ringförmigen Körpers. Durch den Durchbruch sind alle Taschen und Freiräume in Umfangsrichtung fluidtechnisch miteinander verbunden. Das Schmiermittel befindet sich somit nicht nur in den dafür vorgesehenen Freiräumen, um so die Schmiereigenschaften des Kugellagers zu verbessern, sondern zirkuliert vielmehr durch die Durchbrüche.

Des Weiteren bevorzugt ist, dass die Halteklauen und die Aussparungen symmetrisch über den Umfang der zu einander gerichteten Stirnflächen der beiden ringförmigen Körper angeordnet sind. Die symmetrische Anordnung realisiert über den gesamten Umfang gleichbleibend-gute Schmiereigenschaften. Ferner wird auch die Fertigung und Montage der ringförmigen Körper verbessert.

Die Erfindung schließt die technische Lehre ein, dass die Paare von Halteklauen über den gesamten Umfang der zueinander gerichteten Stirnflächen der beiden ringförmigen Körper die gleiche Orientierung aufweisen. Dies ist ebenfalls ein wichtiges Merkmal, das zu einer einfachen Fertigung und Montage beiträgt

Gemäß einer die Erfindung weiter verbessernden Maßnahme wird vorgeschlagen, dass die einzelnen Halteklauen über den gesamten Umfang der zueinander gerichteten Stirnflächen der ringförmigen Körper die gleiche Orientierung aufweisen, wobei diese entgegengesetzt zu der Orientierung der Paare von Halteklauen ist. Durch die entgegengesetzte Orientierung der einzelnen Halteklauen bezüglich der Paare von Halteklauen ist eine Innenkontur der Taschen an die Wälzkörper angepasst. Die Halteklauen weisen somit an der Innenkontur eine konkave Form auf.

Es wird weiterhin vorgeschlagen, dass die beiden ringförmigen Körper an ihren von einander abgewandten Stirnflächen jeweils einen scheibenförmigen Ring aufweisen. Der scheibenförmige Ring ist vorteilhafterweise direkt an die ringförmigen Körper ausgebildet, so dass ein nachträgliches Anbringen durch Schweißen oder Kleben entfällt.

Vorzugsweise weisen die beiden scheibenförmige Ringe eine an einem Innenumfang radial nach innen und eine an einem Außenumfang radial nach außen ausgebildete Lippe auf. Die am Innenumfang angeordnete radial nach innen zeigende Lippe bildet zusammen mit dem Innenring des Kugellagers ein Dichtlabyrinth aus, wohingegen die am Außenumfang angeordnete radial nach außen zeigende Lippe zusammen mit dem Außenring des Kugellagers ein Dichtlabyrinth ausbildet. Dadurch wird nicht nur ein Schutz des Kugellagers gegen Verschmutzung der Umgebung gewährleistet, sondern auch das Schmiermittel innerhalb des Lagerkäfigs und somit auf den Laufflächen der Wälzkörper gehalten.

Des Weiteren bevorzugt ist, dass die beiden ringförmigen Körper aus einem Polymerwerkstoff ausgebildet sind. Vorzugsweise ist der Polymerwerkstoff thermoplastisch, insbesondere Polyamid. Vorteilhafterweise weist das Polyamid eine Verstärkung durch Glasfasern auf. Die Verwendung des Polymerwerkstoffs ist besonders vorteilhaft bezüglich der Fertigung der ringförmigen Körper. Die Herstellung erfolgt bevorzugt nach dem Spritzgussverfahren. Ferner weisen aus einem Polymerwerkstoff bestehende Halteklauen eine höhere Elastizität und bessere Reibungswerte als metallische Halteklauen auf.

Gemäß eines besonders bevorzugten Ausführungsbeispiels sind die einzelnen Halteklauen in Umfangsrichtung breiter ausgebildet als die Paare von Halteklauen, und kommen somit bei einem stirnseitigen Zusammenführen der beiden ringförmigen Körper zum Ausbilden des Lagerkäfigs in Umfangsrichtung rückseitig zur Anlage. Das rückseitige Anliegen der einzelnen Halteklauen verhindert ein Verdrehen der ringförmigen Körper relativ zueinander, so dass ein Verklemmen der Wälzkörper ausgeschlossen werden kann. Da die einzelnen Halteklauen sich nicht über die gesamte Rückseite abstützen ist ein ausreichender Freiraum zur Schmiermittelaufnahme gewährleistet.

### Kurze Beschreibung der Zeichnungen

Weitere, die Erfindung verbessernde Maßnahmen werden nachstehend gemeinsam mit der Beschreibung eines bevorzugten Ausführungsbeispiels der Erfindung anhand der beiliegenden Zeichnungen näher dargestellt. Dabei zeigen:
- Figur 1: eine teilweise Querschnittdarstellung eines erfindungsgemäßen Kugellagers, umfassend einen zweiteiligen Lagerkäfig;
- Figur 2: eine perspektivische Darstellung eines der beiden ringförmigen Körper des erfindungsgemäßen zweiteiligen Lagerkäfigs aus Figur 1;
- Figur 3: eine perspektivische Darstellung des erfindungsgemäßen zweiteiligen Lagerkäfigs aus Figur 1;
- Figur 4: eine perspektivische Darstellung des erfindungsgemäßen zweiteiligen Lagerkäfigs gemäß einem bevorzugten Ausführungsbeispiel.

### Ausführliche Beschreibung der Zeichnungen

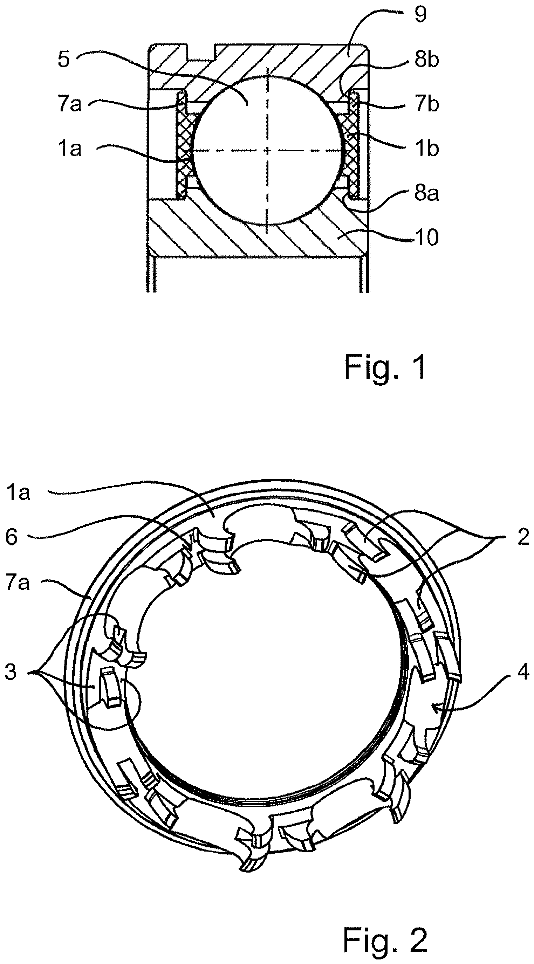

Figur 1 zeigt ein Kugellager, umfassend einen Außenring 9, einen Innenring 10 und einer Vielzahl von zwischen Außenring 9 und Innenring 10 abrollender Wälzkörper 5. Die Wälzkörper 5 sind in Umfangsrichtung durch einen aus einem Polymerwerkstoff ausgebildeten Lagerkäfig, umfassend einen ersten und einen zweiten ringförmigen Körper 1a und 1b zueinander beabstandet angeordnet. Die beiden ringförmigen Körper 1a und 1b weisen an ihren von einander abgewandten Stirnflächen jeweils einen scheibenförmigen Ring 7a und 7b auf. Die beiden scheibenförmige Ringe 7a und 7b weisen jeweils eine an einem Innenumfang radial nach innen und jeweils eine an einem Außenumfang radial nach außen ausgebildete Lippe 8a und 8b auf. Die am Innenumfang angeordneten radial nach innen zeigenden Lippen 8a bilden zusammen mit dem Innenring 10 des Kugellagers ein Dichtlabyrinth aus, wohingegen die am Außenumfang angeordneten radial nach außen zeigenden Lippen 8b zusammen mit dem Außenring 9 des Kugellagers ein Dichtlabyrinth ausbilden.

Gemäß Figur 2 weist der zu dem zweiten ringförmigen Körper 1b identische erste ringförmige Körper 1a an einer nach innen zu den Wälzkörpern 5 gerichteten Stirnfläche eine Vielzahl von Halteklauen 2 auf. Insgesamt sind sieben Paare von Halteklauen 2 entgegengesetzt zu sieben einzelnen Halteklauen 2 angeordnet, so dass ein Paar von Halteklauen 2 und eine einzelne Halteklaue 2 zusammen mit einem dazwischen angeordneten Taschengrund eine halbe Tasche 4 ausbilden. Zwischen den beiden Halteklauen 2 eines jeden Paares von Halteklauen 2 ist eine Aussparung 3 angeordnet. Radial neben der einzelnen Halteklaue 2 ist beidseitig jeweils eine Aussparung 3 angeordnet. Die Aussparungen 3 nehmen bei einer Montage des Lagerkäfigs die Halteklauen 2 des zweiten ringförmigen Körpers 1b auf. Die Paare von Halteklauen 2 weisen im Vergleich zu den einzelnen Halteklauen 2 einen wälzkörperumschlingenden Hinterschnitt auf.

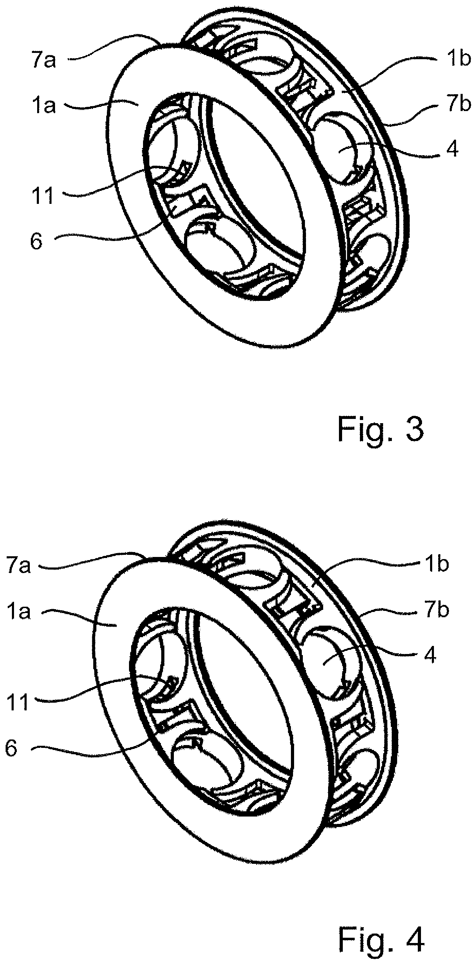

Figur 3 zeigt die beiden ringförmigen Körper 1a und 1b im montierten Zustand. Der somit ausgebildete Lagerkäfig weist zwischen zwei Taschen 4 einen Freiraum 6 zur Aufnahme von Schmiermittel auf. Ferner entstehen aufgrund einer geringeren Höhe der einzelnen Halteklauen 2 Durchbrüche 11 zwischen den einzelnen Halteklauen 2 und der Stirnfläche des gegenüberliegenden ringförmigen Körpers 1b. Die Taschen 4 und die Freiräume 6 sind über die Durchbrüche 11 fluidtechnisch miteinander verbunden, so dass eine Zirkulation des Schmiermittels durch das Rollenlager vereinfacht wird.

Das in Figur 4 dargestellte Ausführungsbeispiel bietet den Vorteil, dass die ringförmigen Körper 1a und 1b relativ zueinander nicht verdrehbar sind. Die einzelnen Halteklauen 2 sind nämlich in Umfangsrichtung breiter ausgebildet als die Paare von Halteklauen 2, und kommen bei einem stirnseitigen Zusammenführen der beiden ringförmigen Körper 1a und 1b in Umfangsrichtung rückseitig zur Anlage. Dadurch wird ein Verklemmen der Wälzkörper 5 sicher verhindert.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, anstelle von dem Paar von Halteklauen 2, was eine Anordnung von zwei durch eine Aussparung 3 voneinander getrennte Halteklauen 2 darstellt, drei Halteklauen 2 radial nebeneinander anzuordnen. Da aufgrund einer solchen Anordnung zwei Aussparungen 3 zwischen den insgesamt drei Halteklauen 2 angeordnet sind, ist statt einer einzelnen Halteklaue 2 ein Paar von Halteklauen 2 gegenüberliegend angeordnet. Die Tasche 4 wird somit durch zwei Paare von Halteklauen 2 und zwei Drillingen von Halteklauen 2 zusammen mit zwei Taschengründen ausgebildet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1a, 1b: ringförmiger Körper
- 2: Halteklaue
- 3: Aussparung
- 4: Tasche
- 5: Wälzkörper
- 6: Freiraum
- 7a, 7b: scheibenförmiger Ring
- 8a, 8b: Lippe
- 9: Außenring
- 10: Innenring
- 11: Durchbruch

## Patentansprüche

1. Zweiteiliger Lagerkäfig für ein Kugellager, umfassend einen ersten und einen zweiten ringförmigen Körper (1a, 1b), die an ihren zueinander gerichteten Stirnflächen eine Vielzahl von Halteklauen (2) aufweisen, wobei die beiden ringförmigen Körper (1a, 1b) identisch ausgebildet und derart miteinander montierbar sind, dass an die Halteklauen (2) angrenzende Aussparungen (3) des einen ringförmigen Körpers (1a, 1b) die Halteklauen (2) des anderen ringförmigen Körpers (1b, 1a) aufnehmen, wodurch in Umfangsrichtung eine Anzahl voneinander beabstandeter Taschen (4) zur Aufnahme und Führung von der gleichen Anzahl an Wälzkörpern (5) entstehen, **dadurch gekennzeichnet, dass** über beide zueinander gerichteten Stirnflächen der ringförmigen Körper (1a, 1b) in Umfangsrichtung mehrfach nacheinander jeweils ein Paar von radial nebeneinander angeordneten Halteklauen (2) mit einer zwischen diesen beiden Halteklauen (2) angeordneten Aussparung (3), ein sich anschließender Taschengrund und eine am Ende des Taschengrundes angeordnete einzeine Halteklaue (2) mit zwei radial daneben angeordneten Aussparungen (3) folgt, so dass nach der Montage des Lagerkäfigs jede Tasche (4) durch mindestens zwei Paare von Halteklauen (2) und mindestens zwei einzelne Halteklauen (2) zusammen mit zwei Taschengründen gebildet wird, wobei sich zwischen zwei Taschen (4) ein aus einem umfangsgerichteten Abstand zwischen einem Paar von Halteklauen (2) einer Tasche (4) und einer einzelnen Halteklaue (2) einer benachbarten anderen Tasche (4) resultierender Freiraum (6) bildet, der zur Aufnahme von Schmiermittel, geeignet ist und wobei die Taschen (4) und die Freiräume (6) über Durchbrüche (11) fluidtechnisch miteinander verbunden sind.

2. Lagerkäfig nach Anspruch 1, **dadurch gekennzeichnet, dass** die Halteklauen (2) und die Aussparungen (3) symmetrisch über den Umfang der zueinander gerichteten Stirnflächen der beiden ringförmigen Körper (1a, 1b) angeordnet sind.

3. Lagerkäfig nach Anspruch 1, **dadurch gekennzeichnet, dass** die Paare von Halteklauen (2) über den gesamten Umfang der zueinander gerichteten Stirnflächen der beiden ringförmigen Körper (1a, 1b) die gleiche Orientierung aufweisen,

4. Lagerkäfig nach Anspruch 1 oder 3, **dadurch gekennzeichnet, dass** die einzelnen Halteklauen (2) über den gesamten Umfang der zueinander gerichteten Stirnflächen der ringförmigen Körper (1a, 1b) die gleiche, jedoch zur Orientierung der Paare von Halteklauen (2) entgegengesetzte Orientierung aufweisen.

5. Lagerkäfig nach Anspruch 1, **dadurch gekennzeichnet, dass** die beiden ringförmigen Körper (1a, 1b) an ihren von einander abgewandten Stirnflächen jeweils einen scheibenförmigen Ring (7a, 7b) aufweisen.

6. Lagerkäfig nach Anspruch 5, **dadurch gekennzeichnet, dass** die beiden scheibenförmige Ringe (7a, 7b) eine an einem Innenumfang radial nach innen und eine an einem Außenumfang radial nach außen ausgebildete Lippe (8a, 8b) aufweisen.

7. Lagerkäfig nach einem der vorhergehenden Ansprüche, **dadurch gekennzeichnet, dass** die beiden ringförmigen Körper (1a, 1b) aus einem Polymerwerkstoff ausgebildet sind.

8. Lagerkäfig nach einem der vorhergehenden Ansprüche, **dadurch gekennzeichnet, dass** die einzelnen Halteklauen (2) in Umfangsrichtung breiter ausgebildet sind als die Paare von Halteklauen (2), und somit bei der Montage der beiden ringförmigen Körper (1a, 1b) zum Ausbilden des Lagerkäfigs in Umfangsrichtung rückseitig zur Anlage kommen.

9. Kugellager, umfassend einen Außenring (9), einen Innenring (10) und einer Vielzahl von zwischen Außenring (9) und Innenring (10) abrollender Wälzkörper (5), die in Umfangsrichtung durch einen Lagerkäfig nach einem der Ansprüche 1 - 9 gleichmäßig zueinander beabstandet angeordnet sind.

## Claims

1. A two-part ball bearing cage for a ball bearing, comprising a first and a second annular body (1a, 1b) having, at the mutual facing end faces thereof, a plurality of holding claws (2), wherein the two annular bodies (1a, 1b) are formed identically and mountable on one another such that the holding claws (2) of the one annular body (1a, 1b) are received in the recesses (3) adjacent to the holding claws (2) of the other annular body (1b, la), whereby, in the circumferential direction, a number of mutually spaced-apart pockets (4) for receiving and guiding of the equal number of roller bodies (5) are present, **characterised in that,** on both mutually facing end faces of the annular bodies (1a, 1b) in the circumferential direction, a pair of holding claws (2) arranged radially adjacent thereto with a recess (3) arranged between these two holding claws (2), a subsequent pocket base, and a single holding claw (2) arranged at the end of the pocket base with two recesses (3) arranged radially adjacent thereto each follow each other repeatedly so that, after the mounting of the ball bearing cage, each pocket (4) is formed by at least two pairs of holding claws (2) and at least two individual holding claws (2) together with two pocket bases, wherein, between two pockets (4), in a circumferential spacing between a pair of holding claws (2) of one pocket (4) and a single holding claw (2) of a neighbouring other pocket (4), there is formed a resulting free space (6), which is suitable for receiving lubricant, and wherein the pockets (4) and the free spaces (6) are fluidly interconnected via passages (11).

2. The ball bearing cage according to claim 1, **characterised in that** the holding claws (2) and the recesses (3) are arranged symmetrically over the circumference of the mutually facing end faces of the two annular bodies (1a, 1b).

3. The ball bearing cage according to claim 1, **characterised in that** the pairs of holding claws (2) have the same orientation over the entire circumference of the mutually facing end faces of the two annular bodies (1a, 1b).

4. The ball bearing cage according to claim 1 or 3, **characterised in that** the individual holding claws (2) have the same orientation over the entire circumference of the mutually facing end faces of the annular body (1a, 1b), however, the opposite orientation for the pairs of holding claws (2).

5. The ball bearing cage according to claim 1, **characterised in that** the two annular bodies (1a, 1b) each have a disc-shaped ring (7a, 7b) on mutually opposite-facing end faces thereof.

6. The ball bearing cage according to claim 5, **characterised in that** the two disc-shaped rings (7a, 7b) have a lip (8a, 8b) formed radially inwardly on an inner circumference and formed radially outwardly on an outer circumference.

7. The ball bearing cage according to one of the preceding claims, **characterised in that** the two annular bodies (1a, 1b) are formed from a polymer material.

8. The ball bearing cage according to one of the preceding claims, **characterised in that** the individual holding claws (2) are wider in the circumferential direction than the pairs of holding claws (2), and thus during assembly are brought into contact in the circumferential direction on the back side of the two annular bodies (1a, 1b) for forming the bearing cage.

9. A ball bearing, comprising an outer ring (9), an inner ring (10), and a plurality of roller bodies (5) between outer ring (9) and inner ring (10) which are arranged to be evenly spaced in the circumferential direction by a ball bearing cage according to any one of claims 1-9.

## Revendications

1. Cage de roulement en deux parties pour roulement à billes, comprenant un premier et un second corps annulaire (1a, 1b) ayant sur leurs faces frontales en regard une pluralité de pattes de maintien (2), les deux corps annulaires (1a, 1b) étant formés de manière identique et pouvant être montés l'un avec l'autre de sorte que des évidements (3) adjacents aux pattes de maintien (2) de l'un des corps annulaires (1a, 1b) reçoivent les pattes de maintien (2) de l'autre corps annulaire (1b, la), de manière à former, dans la direction périphérique, un certain nombre de poches espacées (4) pour recevoir et guider un même nombre de corps de roulement (5), **caractérisé en ce que,** sur les deux faces frontales en regard des corps annulaires (1a, 1b) dans la direction périphérique, se suivent respectivement plusieurs fois l'un après l'autre une paire de pattes de maintien (2) disposées l'une à côté de l'autre radialement, avec un évidement (3) disposé entre ces deux pattes de maintien (2), un fond de poche à la suite et une seule patte de maintien (2) disposée à l'extrémité du fond de poche avec deux évidements (3) disposés radialement à côté de celle-ci, de sorte qu'après le montage de la cage de roulement, chaque poche (4) soit formée par au moins deux paires de pattes de maintien (2) et au moins deux pattes de maintien individuelles (2) conjointement avec deux fonds de poche, un espace libre (6) étant formé entre deux poches (4) résultant d'une distance périphérique entre une paire de pattes de maintien (2) d'une poche (4) et une patte de maintien individuelle (2) d'une autre poche adjacente (4), adapté pour recevoir du lubrifiant et dans lequel les poches (4) et les espaces libres (6) sont reliés les uns aux autres par l'intermédiaire de trous de passage (11) selon la technique des fluides.

2. Cage de roulement selon la revendication 1, **caractérisée en ce que** les pattes de maintien (2) et les évidements (3) sont disposés symétriquement sur la périphérie des faces frontales en regard des deux corps annulaires (1a, 1b).

3. Cage de roulement selon là revendication 1, **caractérisée en ce que** les paires de pattes de maintien (2) sur la totalité de la périphérie des faces frontales en regard des deux corps annulaires (1a, 1b) ont la même orientation.

4. Cage de roulement selon la revendication 1 ou 3, **caractérisée en ce que** les pattes de maintien individuelles (2) sur la totalité de la périphérie des faces frontales en regard des corps annulaires (1a, 1b) présentent une orientation identique, mais opposée à l'orientation des paires de pattes de maintien (2).

5. Cage de roulement selon la revendication 1, **caractérisée en ce que** les deux corps annulaires (1a, 1b) présentent chacun une bague en forme de disque (7a, 7b) sur leurs faces frontales en regard.

6. Cage de roulement selon la revendication 5, **caractérisée en ce que** les deux bagues en forme de disque (7a, 7b) présentent une lèvre formée radialement vers l'intérieur sur une périphérie interne et une lèvre formée radialement vers l'extérieur sur une périphérie externe (8a, 8b).

7. Cage de roulement selon l'une des revendications précédentes, **caractérisée en ce que** les deux corps annulaires (1a, 1b) sont formés d'un matériau polymère.

8. Cage de roulement selon l'une des revendications précédentes, **caractérisée en ce que** chacune des pattes de maintien (2) est plus large dans la direction périphérique que les paires de pattes de maintien (2) et donc, lors du montage, les deux corps annulaires (1a, 1b) viennent en appui côté arrière dans la direction périphérique afin de former la cage de roulement.

9. Roulement à billes, comprenant une bague externe (9), une bague interne (10) et plusieurs corps de roulement (5) roulants entre la bague externe (9) et la bague interne (10) qui sont disposés dans la direction périphérique espacés les uns des autres de manière régulière par une cage de roulement selon l'une des revendications 1 à 9.
